# EUROPÄISCHE PATENTANMELDUNG

(11) **EP 3 585 028 A1**
(43) Veröffentlichungstag der Anmeldung: **25.12.2019**
(21) Anmeldenummer: 18178775.5
(22) Anmeldetag: 20.06.2018
(51) Int. Cl.: H04L 29/06, G06F 21/33, H04L 29/08

(54) **VERFAHREN ZUR ANBINDUNG EINES ENDGERÄTES IN EINE VERNETZBARE RECHNER-INFRASTRUKTUR**

(71) Anmelder: Siemens Aktiengesellschaft, 80333 München (DE)
(72) Erfinder: Schwarz, Robert, 90513 Zirndorf (DE)

(57) **Zusammenfassung**

Die Erfindung nennt ein Verfahren zur Anbindung eines Endgerätes (1) in einen einem Nutzer (6a) zugewiesenen Bereich (4a) einer vernetzbaren Rechner-Infrastruktur (2), welche für eine Mehrzahl an Nutzern (6, 6a) eingerichtet ist, wobei ein Nutzer-Zertifikat (12a) für den dem Nutzer (6a) zugewiesenen Bereich (4a) erstellt wird, und dem Nutzer (6a) und/oder der vernetzbaren Rechner-Infrastruktur (2) zur Verfügung gestellt wird, wobei ein mit dem Nutzer-Zertifikat (12a) kompatibles Endgerät-Zertifikat (16a) erstellt wird, wobei das Endgerät-Zertifikat (16a) in das Endgerät (1) eingegeben wird, wobei das Endgerät (1) über eine Datenverbindung (20) in der vernetzbaren Rechner-Infrastruktur (2) registriert wird, wobei für die Registrierung das Endgerät-Zertifikat (16a) und/oder ein anhand des Endgerät-Zertifikats (16a) verschlüsseltes Passwort vom Endgerät (1) über die Datenverbindung (20) zur vernetzbaren Rechner-Infrastruktur übertragen (2) wird, wobei das Endgerät (1) anhand einer Überprüfung einer Kompatibilität des übertragenen Endgerät-Zertifikats (16a) bzw. des anhand des Endgerät-Zertifikats (16a) verschlüsselten und übertragenen Passwortes mit dem Nutzer-Zertifikat (12a) das Endgerät (1) in der vernetzbaren Rechner-Infrastruktur (2) authentifiziert wird, und wobei bei einer erfolgreichen Authentifizierung für das Endgerät (1) eine Nutzung der vernetzbaren Rechner-Infrastruktur (2) im dem Nutzer (6a) zugewiesenen Bereich (4a) freigegeben wird.

## Beschreibung

Die Erfindung betrifft ein Verfahren zur Anbindung eines Endgerätes in einen einem Nutzer zugewiesenen Bereich einer vernetzbaren Rechner-Infrastruktur, welche für eine Mehrzahl an Nutzern eingerichtet ist, wobei das Endgerät über eine Datenverbindung in der vernetzbaren Rechner-Infrastruktur registriert wird, wobei während der Registrierung ein Passwort vom Endgerät über die Datenverbindung zur vernetzten Rechner-Infrastruktur übertragen wird, wobei das Endgerät anhand einer Überprüfung des übertragenen Passwortes durch die vernetzbare Rechner-Infrastruktur authentifiziert wird.

Das "Internet der Dinge" ("internet of things", IoT) ist ein Konzept, um physisch greifbare Geräte, welche räumlich im Prinzip beliebig weit voneinander getrennt sein können, miteinander zu vernetzen, und sie somit durch entsprechende Kommunikationstechniken und -protokolle miteinander zusammenarbeiten zu lassen. Dies kann beispielsweise für Maschinen in Konstruktionsprozessen der Fall sein, wo sich Konstruktionsanlagen an verschiedenen Orten miteinander über einen Fortschritt der Produktion oder auch über an einem Ort auftretende Probleme informieren, und so für eine effizientere Auslastung der Anlagen aufeinander abstimmen. Ebenso können beispielsweise Anlagen zur insbesondere regenerativen Energieerzeugung sowie Anlagen zur Energieübertragung miteinander kommunizieren, um in Abhängigkeit von den an verschiedenen Orten erzeugten Leistungen die Einspeisung und Auslastung im Netz zu regeln.

Eine wesentliche Herausforderung für die Vernetzung realer Geräte und eine erfolgreiche Verbindung für das Ausnutzen ihrer Synergien bildet hierbei das Erstellen eines geeigneten Kommunikationsprotokolls. Die unterschiedlichen, zu vernetzenden Geräte, welche oftmals von verschiedenen Herstellern gefertigt sein können, müssen Informationen den anderen Teilnehmern im IoT in einer Weise zur Verfügung stellen, in welcher die Informationen für diese verarbeitbar werden. Dies gilt umso mehr, als große Anlagen oftmals für verschiedene ihrer Funktionen Protokolle verwenden, welche je nach Funktion durch unterschiedliche Standards gegeben sind.

Für ein Kommunikationsprotokoll zur Anbindung von Geräten an das IoT ist zudem die dem Protokoll inhärente Sicherheit der Verbindung ein wichtiger Aspekt. Einerseits soll garantiert werden, dass nur entsprechend berechtigte Geräte in einem Back-End des IoT-Netzes Zugriff auf bestimmte Funktionen erhalten, sodass die Authentifizierung für ein Verifizieren dieser Berechtigung möglichst sicher sein soll.

Andererseits ist jedoch oftmals auch eine möglichst einfache und anwenderfreundliche Anbindung der Geräte erwünscht. Ein Cloud-Dienst zu einer konkreten Umsetzung des IoT ist oftmals in einzelne, spezifischen Kunden oder allgemeiner Nutzern zugeordneten Bereichen unterteilt, wobei die jeweiligen Nutzer nur auf die Geräte und auf die im IoT vorgesehenen Funktionen ihres zugewiesenen Bereiches Zugriff haben sollen. Gerade für eine Anbindung von Geräten an "ihren" Bereich wünschen Nutzer hierbei oft eine hohe Flexibilität.

Der Erfindung liegt daher die Aufgabe zugrunde, ein Verfahren zur Anbindung eines Endgerätes an einen einem Nutzer zugewiesene Bereich einer vernetzbaren Rechner-Infrastruktur anzugeben, welches bei möglichst hoher Sicherheit für den Nutzer möglichst komfortabel durchzuführen ist.

Die Aufgabe wird erfindungsgemäß gelöst durch ein Verfahren zur Anbindung eines Endgerätes in einen einem Nutzer zugewiesenen Bereich einer vernetzbaren Rechner-Infrastruktur, welche für eine Mehrzahl an Nutzern eingerichtet ist, wobei ein Nutzer-Zertifikat für den dem Nutzer zugewiesenen Bereich erstellt wird, und dem Nutzer und/oder der Rechner-Infrastruktur zur Verfügung gestellt wird, wobei insbesondere anhand des Nutzer-Zertifikates ein mit dem Nutzer-Zertifikat kompatibles, insbesondere privates Endgerät-Zertifikat erstellt wird, wobei das Endgerät-Zertifikat in das Endgerät eingegeben wird, wobei das Endgerät über eine Datenverbindung in der vernetzbaren Rechner-Infrastruktur registriert wird, wobei für die Registrierung das Endgerät-Zertifikat und/oder ein anhand des Endgerät-Zertifikats verschlüsseltes Passwort vom Endgerät über die Datenverbindung zur vernetzbaren Rechner-Infrastruktur übertragen wird, wobei das Endgerät anhand einer Überprüfung einer Kompatibilität des übertragenen Endgerät-Zertifikats bzw. des anhand des Endgerät-Zertifikats verschlüsselten und übertragenen Passwortes mit dem Nutzer-Zertifikat das Endgerät in der vernetzbaren Rechner-Infrastruktur und insbesondere durch diese authentifiziert wird, und wobei bei einer erfolgreichen Authentifizierung für das Endgerät eine Nutzung der vernetzbaren Rechner-Infrastruktur im dem Nutzer zugewiesenen Bereich freigegeben wird. Vorteilhafte und teils für sich gesehen erfinderische Ausgestaltungen sind Gegenstand der Unteransprüche und der nachfolgenden Beschreibung.

Die vernetzbare Rechner-Infrastruktur umfasst hierbei insbesondere Speichermittel und/oder Prozessor- bzw. Rechenmittel und/oder Programm-Applikationen, welche bevorzugt auf den Rechenmitteln ausführbar sind, und welche insbesondere auf den Speichermitteln hinterlegt sein können. Die vernetzbare Rechner-Infrastruktur ist dabei insbesondere dezentral, d. h. von einer Vielzahl an möglichen räumlichen Standorten aus zugänglich, welche voneinander jeweils erhebliche Abstände aufweisen können. Der Zugang kann hierbei insbesondere über eine Internetverbindung erfolgen. Insofern ist die vernetzbare Rechner-Infrastruktur unabhängig davon, wo die physikalischen Komponenten, also Speichermittel und/oder Prozessor- bzw. Rechenmittel, realisierte sind, durch die Vernetzung mit einem Teilnehmer, welcher insbesondere durch das Endgerät gegeben sein kann, vom jeweiligen Standort des Teilnehmers aus nutzbar.

Das Einrichten der vernetzbaren Rechner-Infrastruktur für eine Mehrzahl an Nutzern erfolgt hierbei insbesondere über eine jeweilige Zuweisung von entsprechenden Bereichen an die Nutzer. Unter einem Bereich, welcher in der vernetzbaren Rechner-Infrastruktur einem Nutzer zugewiesen ist, ist dabei insbesondere ein abgegrenzter Speicherplatz auf dem Speichermittel und/oder die Berechtigung zur Nutzung und Anwendung von bestimmten Programm-Applikationen durch den betreffenden Nutzer, insbesondere in Verbindung mit den in seinem abgegrenzten Speicherplatz gespeicherten Daten umfasst. Bevorzugt sind hierbei die Programm-Applikationen auf einem gesonderten Speicherbereich der Speichermittel hinterlegt, sodass eine konkrete Programm-Applikation bei einem gewünschten Zugriff durch einen konkreten Nutzer bevorzugt nach einer verifizierten Berechtigung des betreffenden Benutzers für diese Programm-Applikation den Prozessor- bzw. Rechenmitteln zur Ausführung zur Verfügung gestellt wird.

Das Nutzer-Zertifikat für den dem Nutzer zugewiesenen Bereich wird bevorzugt durch eine offiziell anerkannte Zertifizierungsstelle erstellt. Die offiziell anerkannte Zertifizierungsstelle stellt dann dem Nutzer und/oder der vernetzbaren Rechner-Infrastruktur, in letzterem Fall beispielsweise durch eine entsprechende Interaktion mit einem Administrator der vernetzbaren Rechner-Infrastruktur, das Nutzer-Zertifikat in geeigneter und insbesondere hinreichend sicherer Weise zur Verfügung, also beispielsweise über eine entsprechend verschlüsselte Datenverbindung, oder auf einem physischen Datenträger, sodass keine potenziell unsichere Datenübertragung erforderlich ist.

Alternativ hierzu kann das Nutzer-Zertifikat auch durch eine entsprechende, innerhalb der vernetzbaren Rechner-Infrastruktur implementierte Zertifizierungsstelle erstellt werden. Eine Kompatibilität des Endgerät-Zertifikat mit dem Nutzer-Zertifikat umfasst hierbei insbesondere, dass eine mittels des Endgerät-Zertifikates verschlüsselte Nachricht durch das Nutzer-Zertifikat entschlüsselt werden kann. Insbesondere kann dabei durch die Forderung einer Kompatibilität, welche in der Praxis durch einen entsprechenden Algorithmus zur Erstellung wenigstens eines der genannten Zertifikate zu implementieren ist, auch eine Hierarchie dahingehend definiert werden, dass zu einem gegebenen Nutzer-Zertifikat eine Mehrzahl an jeweils voneinander verschiedenen Endgerät-Zertifikaten existieren kann, welche für sich alle jeweils mit dem Nutzer-Zertifikat kompatibel sind. In der Praxis lässt sich dies beispielsweise dadurch implementieren, dass ein Endgerät-Zertifikat anhand des Nutzer-Zertifikates erstellt wird, bevorzugt mittels einer geeigneten Hash-Funktion.

Das Endgerät-Zertifikat wird bevorzugt getrennt von der vernetzbaren Rechner-Infrastruktur in das Endgerät eingegeben, d. h., dass zum Zeitpunkt der Eingabe des Endgerät-Zertifikates in das Endgerät keine Datenverbindung vom Endgerät zur vernetzbaren Rechner-Infrastruktur besteht. Die Eingabe kann dabei beispielsweise über eine kabelgebundene Verbindung zu einem USB-Speicher oder zu einem von der vernetzbaren Rechner-Infrastruktur getrennten Rechner erfolgen, welcher mit einem entsprechenden Speichermedium ausgerüstet ist.

Für eine Registrierung des Endgerätes in der vernetzbaren Rechner-Infrastruktur wird nun das Endgerät-Zertifikat über eine Datenverbindung zur vernetzbaren Rechner-Infrastruktur übertragen, wobei die vernetzbare Rechner-Infrastruktur derart eingerichtet ist, dass auf eine Kommunikationsanfrage eines Endgerätes zur Registrierung das Endgerät-Zertifikat dieser Kommunikationsanfrage zugeordnet wird, beispielsweise über einen entsprechenden Registrierungs-Assistenten. Alternativ oder auch zusätzlich zum Endgerät-Zertifikat kann vom Endgerät über die Datenverbindung auch ein Passwort, welches anhand des Endgerät-Zertifikat insbesondere vom Endgerät selbst verschlüsselt wurde, an die vernetzbare Rechner-Infrastruktur übertragen werden.

Für eine Überprüfung der Kompatibilität des übertragenen Endgerät-Zertifikat bzw. des anhand des Endgerät-Zertifikat verschlüsselten und übertragenen Passwortes mit dem Nutzer-Zertifikat kann im Rahmen der vernetzbaren Rechner-Infrastruktur insbesondere ein entsprechender Registrierungs-Assistent, zum Beispiel implementiert als eine entsprechende Programm-Applikation, eingerichtet sein. Erfolgt beispielsweise die Kommunikation zwischen dem Endgerät und der vernetzbaren Rechner-Infrastruktur im Rahmen eines MQTT-Protokolls, so ist der besagte Assistent bevorzugt als ein MQTT-Broker implementiert. Ist das Nutzer-Zertifikat nur dem Nutzer selbst, jedoch nicht global der gesamten vernetzbaren Rechner-Infrastruktur zur Verfügung gestellt, so erfolgt die Überprüfung auf der Ebene des dem Nutzer zugewiesenen Bereiches, in welchen bevorzugt auch der entsprechende Assistent implementiert ist. Eine Authentifizierung des Endgerätes umfasst insbesondere ein bei der Überprüfung erfolgendes Feststellen einer Kompatibilität der genannten Zertifikate.

Eine Freigabe einer Nutzung der vernetzbaren Rechner-Infrastruktur im dem Nutzer zugewiesenen Bereich umfasst insbesondere eine Zugriff auf den dem Nutzer zugewiesenen Speicherplatz durch das Gerät, sowie eine Nutzung der Programm-Applikationen durch das Endgerät und/oder in Verbindung mit dem Endgerät, für welche der Benutzer im Rahmen der vernetzbaren Rechner-Infrastruktur selbst eine Berechtigung zur Nutzung hat.

Das vorgeschlagene Vorgehen ermöglicht es dem Nutzer, nach einer erfolgreichen Zertifizierung für den ihm zugewiesenen Bereich selbst als "Zertifizierungsstelle" für die einzelnen Endgeräte zu handeln. Dadurch muss ein einzelnes Endgerät nicht mehr für vollständige vernetzbare Rechner-Infrastruktur zertifiziert werden, und das entsprechende Zertifikat aufwendig dort hinterlegt werden, sondern vielmehr wird dem Nutzer die Möglichkeit eingeräumt, dass durch seine Zertifizierung hergestellte Vertrauen für den ihm zugewiesenen Bereich der vernetzbaren Rechner-Infrastruktur durch eine entsprechende Zertifizierung auf die anzuwendenden Endgeräte zu übertragen.

Bevorzugt wird das Endgerät-Zertifikat durch eine Ableitung vom Nutzer-Zertifikat erstellt. Dies erfolgt insbesondere durch einen entsprechenden Algorithmus, zum Beispiel eine Hash-Funktion, bei welcher die geforderten Kompatibilitätseigenschaften des abgeleiteten Zertifikats erreicht werden. Dies ermöglicht es dem Nutzer, über ein entsprechendes ausstellen von Endgerät-Zertifikaten einem von ihm a priori als vertrauenswürdig eingestuften Endgerät einen Zugang zum ihm zugewiesenen Bereich zu gewähren.

Günstigerweise wird das Endgerät-Zertifikat durch den Nutzer und/oder innerhalb des dem Nutzer zugewiesenen Bereiches der vernetzbaren Rechner-Infrastruktur durch eine entsprechende Anwendung erstellt. Hierdurch bleibt es dem Nutzer erspart, für ein Erstellen des Endgerät-Zertifikates eine entsprechende Anfrage an eine Verwaltungseinheit der vernetzbaren Rechner-Infrastruktur richten zu müssen. Vielmehr kann der Nutzer oder auch ein von ihm als vertrauenswürdig eingestufter Dritter im ihm zugewiesenen Bereich der vernetzbaren Rechner-Infrastruktur das Endgerät-Zertifikat selbst erstellen. Die entsprechende Anwendung zum Erstellen des Endgerät-Zertifikat kann dabei durch die vernetzbare Rechner-Infrastruktur über eine entsprechende Berechtigung dem Nutzer zur Verfügung gestellt werden.

Vorteilhafterweise erfolgt die Eingabe des Endgerät-Zertifikates in das Endgerät während der Fertigung des Endgerätes in einen Speicher von selbigen und/oder durch einen Anschluss eines nicht flüchtigen Speichermediums an das Endgerät, auf welchem das Endgerät-Zertifikat gespeichert ist. Bevorzugt erfolgt hierbei die Eingabe des Endgerät-Zertifikates in das Endgerät vollständig von der vernetzbaren Rechner-Infrastruktur getrennt, d. h., es wird für die Übertragung keine wie auch immer geartete Datenverbindung zwischen dem Endgerät und der vernetzbaren Rechner-Infrastruktur genutzt.

Hierdurch wird die Sicherheit der Registrierung erhöht, da die Verteilung des Endgerät-Zertifikates nun als sicher vorausgesetzt werden kann, und keine weiteren Annahmen über eine eventuelle Datenverbindung für die Sicherheit erforderlich sind. Konkret kann dabei die Übertragung des Endgerät-Zertifikates beispielsweise dadurch erfolgen, dass ein von der vernetzbaren Rechner-Infrastruktur getrennter Rechner mit dem Endgerät während dessen Fertigungsprozesses verbunden wird. Dem besagten Rechner wird nun ein Speichermedium, zum Beispiel ein USB-Speicher oder eine CD-ROM zugeführt, auf welcher das Endgerät-Zertifikat gespeichert ist. Die Eingabe des selbigen in das Endgerät erfolgt nun durch ein auslesen des Speichermediums durch den Rechner und eine anschließende Übertragung des Endgerät-Zertifikates über die Datenverbindung vom Rechner an das Endgerät.

Als weiter vorteilhaft erweist es sich, wenn im dem Nutzer zugewiesenen Bereich eine Mehrzahl an Subnutzer-Bereichen bereitgestellt wird, welche jeweils für einen Zugriff durch unterschiedliche Subnutzer eingerichtet sind, wobei bei einer erfolgreichen Authentifizierung das Endgerät für eine Nutzung der vernetzbaren Rechner-Infrastruktur in einem entsprechenden Subnutzer-Bereich freigegeben wird. Unter einer Nutzung im Subnutzer-Bereich ist hierbei insbesondere zu verstehen, dass das Endgerät nur für eine Nutzung von Funktionen freigegeben wird, für welche der betreffende Subnutzer eine entsprechende Berechtigung aufweist. Dies kann insbesondere umfassen, dass innerhalb eines dem Nutzer zugewiesenen Bereiches globale Funktionen der vernetzbaren Rechner-Infrastruktur existieren, welche für alle Subnutzer dieses Bereiches zur Verfügung stehen. In diesem Fall hat das Endgerät Zugriff auf die besagten globalen Funktionen, und von den für die einzelnen Subnutzer spezifischen Funktionen nur Zugriff auf diejenigen Funktionen, welche im Subnutzer-Bereich freigegeben sind. Die Erstellung des Endgerät-Zertifikates erfolgt dabei bevorzugt durch den Subnutzer und/oder in dessen Subnutzer-Bereich.

Bevorzugt wird hierbei für eine Mehrzahl an Subnutzern des dem Nutzer zugewiesenen Bereiches anhand des Nutzer-Zertifikates ein mit dem Nutzer-Zertifikat kompatibles Subnutzer-Zertifikat erstellt, wobei diese Subnutzer-Zertifikate jeweils paarweise nicht miteinander kompatibel sind, und wobei das Endgerät-Zertifikat anhand des Subnutzer-Zertifikat erstellt wird. Unter der besagten paarweisen Inkompatibilität der Subnutzer-Zertifikate ist hierbei insbesondere zu verstehen, dass eine mit einem ersten Subnutzer-Zertifikat verschlüsselte Nachricht nicht mittels eines zweiten Subnutzer-Zertifikates entschlüsselt werden kann. Wird nun das Endgerät-Zertifikat anhand eines konkreten Subnutzer-Zertifikates erstellt, so erlaubt dies dem entsprechenden Subnutzer eine einfache Kontrolle hinsichtlich einer Registrierung seiner infrage kommenden Endgeräte im dem Nutzer zugewiesenen Bereich der vernetzbaren Rechner-Infrastruktur. Die Sicherheit der Verbindung seines Endgerät mit dem dem Nutzer zugewiesenen Bereich kann hierbei durch die in paarweise Inkompatibilität der einzelnen Subnutzer-Zertifikate erreicht werden.

In einer vorteilhaften Ausgestaltung wird für eine Kommunikation des Endgerätes mit der vernetzbaren Rechner-Infrastruktur ein Publish-Subscribe-Protokoll verwendet. Die Kommunikation eines Endgerätes mit einer vernetzbaren Rechner-Infrastruktur wie z.B. einem Cloud-Dienst kann einerseits Request-Resonse-basiert ablaufen. Dies bedeutet, dass für eine konkrete Anfrage von einem Teilnehmer des Kommunikationsprotokolls an den anderen Teilnehmer eine dauerhafte Verbindung und entsprechende Zuordnung möglich ist, was mit einer zunehmenden Teilnehmeranzahl und insbesondere bei einer Asymmetrie (Anfragen von vielen "Clients" an einen "Server", Antwort des einen "Server" an potentiell viele "Clients") zu einer Verlangsamung der Kommunikation führen kann. In einem Kommunikationsprotokoll nach dem Publish-Subscribe-Prinzip, auch "pub/sub" genannt, veröffentlicht ein Teilnehmer eine mit einem Marker versehene Nachricht ("publish), welche a priori von beliebigen anderen Teilnehmern gelesen werden kann. Die anderen Teilnehmer können nun selbst diejenigen Marker definieren, deren Nachrichten sie überhaupt empfangen/lesen möchten ("subscribe"). Dies vereinfacht die Kommunikation in komplexen Netzwerken erheblich. Gerade für eine Verbindung von potentiell vielen Endgeräten an die vernetzbare Rechner-Infrastruktur ist daher ein Publish-Subscribe-Protokoll für einen niedrigen Kommunikations-Overhead vorteilhaft.

Bevorzugt erfolgt eine Kommunikation des Endgerätes mit der vernetzbaren Rechner-Infrastruktur im Rahmen eines OPC-UA-Protokolls. Das OPC-UA-Protokoll ist ein Protokoll zum automatisierten Informationsaustausch zwischen Endgeräten, wie sie insbesondere in industriellen Maschinen gegeben sein können. Zur Anbindung eines Endgerätes an eine vernetzbare Rechner-Infrastruktur, insbesondere an einen Cloud-Dienst, im Rahmen des OPC-UA-Protokolls, ist das vorgeschlagene Verfahren besonders vorteilhaft, da das Protokoll selbst keinen Standard für eine sichere Anbindung von Endgeräten bereitstellt. Dieser Mangel kann nun mit dem vorliegenden Verfahren überwunden werden.

Als weiter vorteilhaft erweist es sich, wenn die Registrierung des Endgerätes in der vernetzbaren Rechner-Infrastruktur durch eine Anmeldung mittels einer für das Endgerät spezifischen, insbesondere öffentlichen Anmeldekennung und eines insbesondere privaten Passworts erfolgt, wobei als Passwort das Endgerät-Zertifikat verwendet wird, oder das Passwort derart vom Endgerät-Zertifikat abgeleitet wird, dass das Passwort mit dem Nutzer-Zertifikat kompatibel ist. Insbesondere kann hierbei die Anmeldekennung durch ein JSON Web Token gegeben sein, welches mit dem Endgerät-Zertifikat bzw. mit einem hiervon unter Wahrung der Kompatibilität mit dem Nutzer-Zertifikat abgeleiteten Passwort verschlüsselt wird.

Zweckmäßigerweise wird als vernetzbare Rechner-Infrastruktur ein Cloud-Dienst genutzt, wobei als der dem Nutzer zugewiesene Bereich ein Tenant im Cloud-Dienst genutzt wird. Ein Cloud-Dienst ist hierbei eine vernetzbare Rechner-Infrastruktur, welche derart eingerichtet sein kann, dass sie im Wesentlichen ohne räumliche Beschränkung weltweit über eine übliche Internetverbindung zu erreichen ist. Aufgrund der zunehmenden Nutzung von Cloud-Diensten zur Vernetzung von Endgeräten gerade im industriellen Umfeld eignet sich hierfür das Verfahren besonders.

Günstigerweise wird die Registrierung des Endgerätes über eine in der vernetzbaren Rechner-Infrastruktur hierzu vorgesehene und eingerichtete Registrierungsstelle abgewickelt, wobei die Registrierungsstelle der vernetzbaren Rechner-Infrastruktur dem Endgerät nach einer erfolgreichen Authentifizierung einen Zugangsmarker zuweist, mittels dessen das Endgerät einen Zugriff auf den dem Nutzer zugewiesenen Bereich der vernetzbaren Rechner-Infrastruktur erhält. Eine Registrierungsstelle kann dabei virtuell als eine entsprechende Programm-Applikation implementiert sein. Der Zugangsmarker kann dabei durch ein entsprechendes Token gegeben sein, welches bevorzugt in einem geeigneten Dateiformat vorliegt. Der dem Nutzer zugewiesene Bereich lässt in diesem Fall nur diejenigen Endgeräte auf sich zugreifen, welchen ein besagter Zugangsmarker zugewiesen ist.

Die Erfindung nennt weiter eine vernetzbare Rechner-Infrastruktur, umfassend eine Mehrzahl an Bereichen, welche jeweils unterschiedlichen Nutzern zugewiesen sind, eine Anzahl an Zugangspunkten zum Aufbau jeweils wenigstes einer Datenverbindung zu einem insbesondere externen, also a priori der vernetzbaren Rechner-Infrastruktur nicht zugehörigen Endgerät, einen nichtflüchtigen Speicher, und einen Prozessor. Der Prozessor ist hierbei dazu eingerichtet, einen Identifikator, welcher durch eine über einen Zugangspunkt aufgebaute Datenverbindung von einem Endgerät zur vernetzbaren Rechner-Infrastruktur übertragen wird, auf eine Kompatibilität mit einem im nichtflüchtigen Speicher hinterlegten, einem konkreten Nutzer zugeordneten Nutzer-Zertifikat zu überprüfen, und bei einer festgestellten Kompatibilität des Identifikators mit dem Nutzer-Zertifikat für das Endgerät eine Nutzung der vernetzbaren Rechner-Infrastruktur im dem entsprechenden Nutzer zugewiesenen Bereich freizugeben. Die für das Verfahren und für seine Weiterbildungen angegebenen Vorteile können sinngemäß auf die vernetzbare Rechner-Infrastruktur übertragen werden.

Bevorzugt ist als Identifikator ein Endgerät-Zertifikat gemäß dem vorbeschriebenen Verfahren oder ein mit dem Endgerät-Zertifikat verschlüsseltes Passwort gegeben. Besonders bevorzugt ist die vernetzbare Rechner-Infrastruktur als ein Cloud-Dienst ausgebildet.

Nachfolgend wird ein Ausführungsbeispiel der Erfindung anhand von Zeichnungen näher erläutert. Hierbei zeigt schematisch:

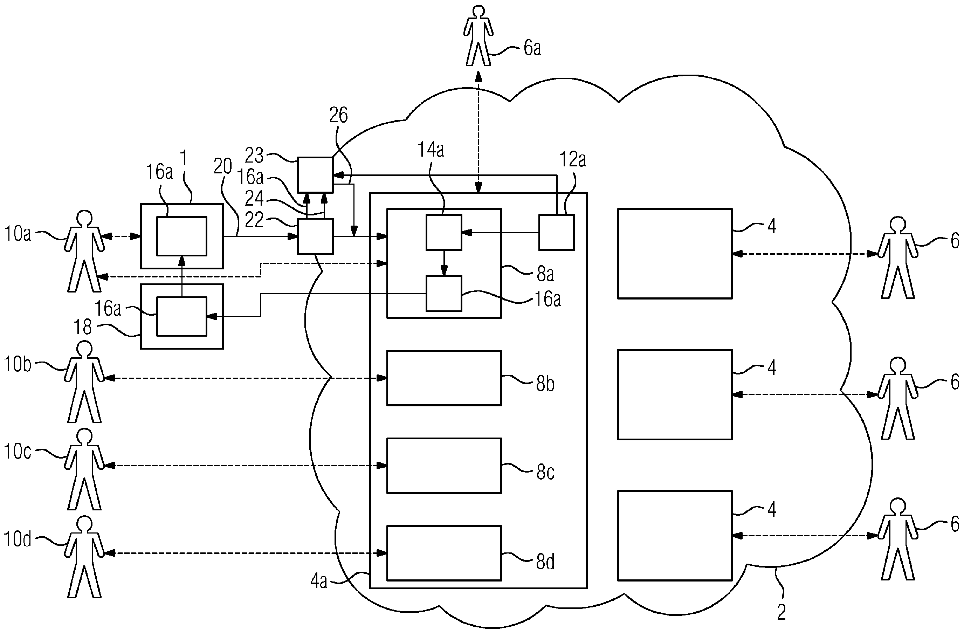

- FIG 1: in einem Blockdiagramm ein Verfahren zur Anbindung eines Endgerätes in eine vernetzbare Rechner-Infrastruktur.

In FIG 1 ist schematisch in einem Blockdiagramm ein Verfahren dargestellt, durch welches ein Endgerät 1 an eine vernetzbare Rechner-Infrastruktur 2 angebunden wird. Die vernetzbare Rechner-Infrastruktur 2 ist hierbei vorliegend durch einen Cloud-Dienst gegeben, welcher strukturell in unterschiedliche Bereiche 4 aufgeteilt ist, die jeweils unterschiedlichen Nutzern 6 zugewiesen sind. Dies umfasst insbesondere voneinander getrennte Speicherbereiche im Speicherplatz der vernetzbaren Rechner-Infrastruktur 2, sowie gegebenenfalls auch ein Zugriff auf unterschiedliche Funktionen und/oder Applikationen der vernetzbaren Rechner-Infrastruktur 2 für die unterschiedlichen Nutzern zugewiesenen Bereiche 4. Ein Bereich 4a, welcher einem konkreten Benutzer 6a zugewiesen ist, ist hierbei in eine Mehrzahl von Subnutzer-Bereichen 8a-d eingeteilt, die jeweils für einen Zugriff durch unterschiedliche Subnutzer 10a-d eingerichtet sind.

Eine derartige Struktur kann beispielsweise im Fall gegeben sein, dass zunächst ein Cloud-Dienstleister seinen Cloud-Dienst, also die vernetzbare Rechner-Infrastruktur 2, generell einer Mehrzahl an Unternehmen, welche vorliegend durch die Nutzer 6 gegeben sind, zur Verfügung stellt und diesen entsprechende Bereiche 4 zuweist. Ist nun beispielsweise eines dieser Unternehmen gegeben durch einen Hersteller von Maschinen und Anlagen, deren Betrieb bevorzugt in besonderer Weise für eine Wartung und/oder Instandhaltung zu überwachen ist, so kann der Hersteller der Anlagen als Nutzer 6 in seinem zugewiesenen Bereich 4 der vernetzbaren Rechner-Infrastruktur 2 die Subnutzer-Bereiche 8a-d für die Subnutzer 10a-d vorsehen, welche ihrerseits gegeben sind durch die Anwender der Anlagen des Benutzers 6a. Die unterschiedlichen Subnutzer 10a-d haben hierbei jeweils nur Zugriff auf die für ihre jeweils eigenen Anlagen relevanten Funktionen im Rahmen der vernetzbaren Rechner-Infrastruktur 2.

Ein konkreter Subnutzer 10a möchte nun das Endgerät 1 für eine Nutzung der Funktionen der vernetzbaren Rechner-Infrastruktur 2 mit dieser verbinden. Das Endgerät 1 ist hierbei gegebenenfalls nicht auf dem Geräte-Standard des Benutzers 6a basierend, sondern kann beispielsweise durch ein zusätzliches Messgerät für Betriebsparameter der Anlagen des Benutzers 6a gegeben sein. Im dem Nutzer 6a zugewiesenen Bereich 4a wird hierfür zunächst ein digitales Nutzer-Zertifikat 12a hinterlegt. Das Nutzer-Zertifikat 12a kann hierbei beispielsweise durch eine offiziell anerkannte Zertifizierungsstelle ausgegeben werden. Anhand des Nutzer-Zertifikats 12a erstellt der Nutzer 6a für jeden der Subnutzer 10a-d jeweils ein entsprechendes Subnutzer-Zertifikat 14a-d, welche jeweils mit dem Nutzer-Zertifikat 12a kompatibel sind. Eine Kompatibilität der betreffenden Zertifikate umfasst hierbei insbesondere, dass eine mittels des hierarchisch nachgeordneten Zertifikates, also vorliegend einem der Subnutzer-Zertifikate 14a-d, verschlüsselte Nachricht durch das hierarchisch höher geordnete Zertifikat, also vorliegend das Nutzer-Zertifikat 12a, entschlüsselt werden kann. Die Subnutzer-Zertifikate 14a-d können dabei beispielsweise vom Nutzer-Zertifikat 12a mittels einer geeigneten Hash-Funktion abgeleitet werden.

Der Subnutzer 10a ist somit im Besitz des Subnutzer-Zertifikates 14a. Von diesem Subnutzer-Zertifikat 14a kann nun der Subnutzer 10a - beispielsweise erneut anhand einer geeigneten Hash-Funktion - ein Endgerät-Zertifikat 16a ableiten, welches mit dem Subnutzer-Zertifikat 14a und insbesondere mit dem Nutzer-Zertifikat 12a in der bereits beschriebenen Weise kompatibel ist.

Das Endgerät 1, welches sich im Besitz des Benutzers 10a befindet, soll für eine Kommunikation mit der vernetzten Rechner-Infrastruktur 2 über ein OPC-UA-Pub/Sub-Protokoll verbunden werden. Hierfür wird das Endgerät-Zertifikat 16a auf einem Datenträger 18 gespeichert, und vom Subnutzer 10a auf das Endgerät 1 übertragen. Der Datenträger 18 kann beispielsweise als ein USB-Speicher vorliegen, von welchem aus zum Endgerät 1 eine kabelgebundene Datenverbindung zum Endgerät 1 aufgebaut wird, über die das Endgerät-Zertifikat 16a übertragen wird. Über eine Datenverbindung 20 wird nun das Endgerät 1 mit einem Zugangspunkt 22 der virtuellen Rechner-Infrastruktur 2 verbunden. Der Zugangspunkt 22 ist mit einem MQTT-Broker als Registrierungsstelle 23 verbunden, an welchen das Endgerät 1 nun eine Anmeldekennung 24 übermittelt, und diese mit dem Endgerät-Zertifikat 16a als Passwort bestätigt. Alternativ dazu kann die Anmeldekennung 24 in einem JSON Web Token bestehen, welches mit dem Endgerät-Zertifikat 16a verschlüsselt wurde.

Im MQTT-Broker wird überprüft, ob das vom Endgerät 1 übermittelte Endgerät-Zertifikat 16a mit dem Nutzer-Zertifikat 12a kompatibel ist. Ist dies der Fall, so wird dem Endgerät 1 ein Zugangsmarker 26 in Form eines Access Tokens zugewiesen, durch welchen das Endgerät einen Zugriff auf diejenigen Funktionen der vernetzbaren Rechner-Infrastruktur 2 erhält, welche im Subnutzer-Bereich 8a für den Subnutzer 10a freigegeben sind, also insbesondere auf den Speicherplatz des Subnutzer-Bereiches und auf die Programm-Applikationen des Bereichs 6a, für welche der Subnutzer 8a eine Berechtigung hat.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Verfahren zur Anbindung eines Endgerätes (1) in einen einem (6a) Nutzer zugewiesenen Bereich (4a) einer vernetzbaren Rechner-Infrastruktur (2), welche für eine Mehrzahl an Nutzern (6, 6a) eingerichtet ist,
wobei ein Nutzer-Zertifikat (12a) für den dem Nutzer (6a) zugewiesenen Bereich (4a) erstellt wird, und dem Nutzer (6a) und/oder der vernetzbaren Rechner-Infrastruktur (2) zur Verfügung gestellt wird,
wobei ein mit dem Nutzer-Zertifikat (12a) kompatibles Endgerät-Zertifikat (16a) erstellt wird,
wobei das Endgerät-Zertifikat (16a) in das Endgerät (1) eingegeben wird,
wobei das Endgerät (1) über eine Datenverbindung (20) in der vernetzbaren Rechner-Infrastruktur (2) registriert wird,
wobei für die Registrierung das Endgerät-Zertifikat (16a) und/oder ein anhand des Endgerät-Zertifikats (16a) verschlüsseltes Passwort vom Endgerät (1) über die Datenverbindung (20) zur vernetzbaren Rechner-Infrastruktur übertragen (2) wird,
wobei das Endgerät (1) anhand einer Überprüfung einer Kompatibilität des übertragenen Endgerät-Zertifikats (16a) bzw. des anhand des Endgerät-Zertifikats (16a) verschlüsselten und übertragenen Passwortes mit dem Nutzer-Zertifikat (12a) das Endgerät (1) in der vernetzbaren Rechner-Infrastruktur (2) authentifiziert wird, und
wobei bei einer erfolgreichen Authentifizierung für das Endgerät (1) eine Nutzung der vernetzbaren Rechner-Infrastruktur (2) im dem Nutzer (6a) zugewiesenen Bereich (4a) freigegeben wird.

2. Verfahren nach Anspruch 1,
wobei das Endgerät-Zertifikat (16a) durch eine Ableitung vom Nutzer-Zertifikat (12a) erstellt wird.

3. Verfahren nach Anspruch 1 oder Anspruch 2,
wobei das Nutzer-Zertifikat (12a)
- durch den Nutzer (6a) und/oder
- innerhalb des dem Nutzer (6a) zugewiesenen Bereiches (4a) der vernetzbaren Rechner-Infrastruktur (2) durch eine entsprechende Anwendung erstellt wird.

4. Verfahren nach einem der vorhergehenden Ansprüche,
wobei die Eingabe des Endgerät-Zertifikates (16a) in das Endgerät (1) während der Fertigung des Endgerätes (1) in einen Speicher des Endgerätes (1) und/oder durch einen Anschluss eines nicht-flüchtigen Speichermediums (18), auf welchem das Endgerät-Zertifikat (16a) gespeichert ist, an das Endgerät (1) erfolgt.

5. Verfahren nach einem der vorhergehenden Ansprüche,
wobei im dem Nutzer (6a) zugewiesenen Bereich (4a) eine Mehrzahl an Subnutzer-Bereichen (8a-d) bereitgestellt wird, welche jeweils für einen Zugriff durch unterschiedliche Subnutzer (10a-d) eingerichtet sind, und
wobei bei einer erfolgreichen Authentifizierung das Endgerät (1) für eine Nutzung der vernetzbaren Rechner-Infrastruktur (2) in einem entsprechenden Subnutzer-Bereich (8a) freigegeben wird.

6. Verfahren nach Anspruch 5,
wobei für eine Mehrzahl an Subnutzern (10a-d) des dem Nutzer (6a) zugewiesenen Bereiches (4a) der vernetzbaren Rechner-Infrastruktur (2) jeweils anhand des Nutzer-Zertifikats (12a) ein mit dem Nutzer-Zertifikat (12a) kompatibles Subnutzer-Zertifikat (14a-d) erstellt wird,
wobei diese Subnutzer-Zertifikate (14a-d) jeweils paarweise nicht miteinander kompatibel sind, und
wobei das Endgerät-Zertifikat (1) eines Subnutzers (10a) anhand dessen Subnutzer-Zertifikats (14a) erstellt wird.

7. Verfahren nach einem der vorhergehenden Ansprüche,
wobei für eine Kommunikation des Endgerätes 81) mit der vernetzbaren Rechner-Infrastruktur (2) ein Publish-Subscribe-Protokoll verwendet wird.

8. Verfahren nach einem der vorhergehenden Ansprüche,
wobei eine Kommunikation des Endgerätes (1) mit der vernetzbaren Rechner-Infrastruktur (2) im Rahmen eines OPC-UA-Protokolls erfolgt.

9. Verfahren nach einem der vorhergehenden Ansprüche,
wobei die Registrierung des Endgerätes (1) in der vernetzbaren Rechner-Infrastruktur (2) durch eine Anmeldung mittels einer für das Endgerät (1) spezifischen Anmeldekennung (24) und eines Passworts erfolgt, und
wobei als Passwort das Endgerät-Zertifikat (16a) verwendet wird, oder das Passwort derart vom Endgerät-Zertifikat (16a) abgeleitet wird, dass das Passwort mit dem Nutzer-Zertifikat (12a) kompatibel ist.

10. Verfahren nach einem der vorhergehenden Ansprüche,
wobei als vernetzbare Rechner-Infrastruktur (2) ein Cloud-Dienst genutzt wird, und
wobei als der dem Nutzer (6a) zugewiesene Bereich (4a) ein Tenant im Cloud-Dienst genutzt wird.

11. Verfahren nach einem der vorhergehenden Ansprüche,
wobei die Registrierung des Endgerätes (1) über eine in der vernetzbaren Rechner-Infrastruktur (2) hierzu vorgesehene und eingerichtete Registrierungsstelle (23) abgewickelt wird, und
wobei die Registrierungsstelle (23) der vernetzbaren Rechner-Infrastruktur (2) dem Endgerät (1) nach einer erfolgreichen Authentifizierung einen Zugangsmarker (26) zuweist, mittels dessen das Endgerät (1) einen Zugriff auf den dem Nutzer (6a) zugewiesenen Bereich (4a) der vernetzbaren Rechner-Infrastruktur (2) erhält.

12. Vernetzbare Rechner-Infrastruktur (2), umfassend:
- eine Mehrzahl an Bereichen (4, 4a), welche jeweils unterschiedlichen Nutzern (6, 6a) zugewiesen sind,
- eine Anzahl an Zugangspunkten (22) zum Aufbau jeweils wenigstes einer Datenverbindung (20) zu einem Endgerät (1),
- einen nichtflüchtigen Speicher, und
- einen Prozessor,
wobei der Prozessor dazu eingerichtet ist,
- einen Identifikator, welcher durch eine über einen Zugangspunkt (22) aufgebaute Datenverbindung (20) von einem Endgerät (1) zur vernetzbaren Rechner-Infrastruktur (2) übertragen wird, auf eine Kompatibilität mit einem im nichtflüchtigen Speicher hinterlegten, einem konkreten Nutzer (6a) zugeordneten Nutzer-Zertifikat (12a) zu überprüfen, und
- bei einer festgestellten Kompatibilität des Identifikators mit dem Nutzer-Zertifikat (12a) für das Endgerät (1) eine Nutzung der vernetzbaren Rechner-Infrastruktur (2) im dem entsprechenden Nutzer (6a) zugewiesenen Bereich (4a) freizugeben.

13. Vernetzbare Rechner-Infrastruktur (2) nach Anspruch 12, welche als Cloud-Dienst ausgebildet ist.
